# EUROPÄISCHE PATENTSCHRIFT

(11) **EP 3 859 382 B1**
(45) Veröffentlichungstag und Bekanntmachung des Hinweises auf die Patenterteilung: **03.08.2022**
(21) Anmeldenummer: 20154108.3
(22) Anmeldetag: 28.01.2020
(51) Int. Cl.: G01S 13/00, F16P 3/12

(54) **SICHERHEITSSYSTEM UND VERFAHREN ZUR LOKALISIERUNG EINER PERSON ODER EINES OBJEKTES IN EINEM ÜBERWACHUNGSBEREICH MIT EINEM SICHERHEITSSYSTEM**
SECURITY SYSTEM AND METHOD FOR LOCATING A PERSON OR OBJECT IN A SURVEILLANCE AREA WITH A SECURITY SYSTEM
SYSTÈME DE SÉCURITÉ ET PROCÉDÉ DE LOCALISATION D'UNE PERSONNE OU D'UN OBJET DANS UNE ZONE DE SURVEILLANCE À L'AIDE D'UN SYSTÈME DE SÉCURITÉ

(43) Veröffentlichungstag der Anmeldung: 04.08.2021
(73) Patentinhaber: SICK AG, 79183 Waldkirch (DE)
(72) Erfinder: HAMMES, Markus, 79117 Freiburg (DE); AMS, Mathias, 79211 Denzlingen (DE)

(56) Entgegenhaltungen:
- EP-A1- 1 635 107
- DE-A1-102016 007 519

## Beschreibung

Die vorliegende Erfindung betrifft ein Sicherheitssystem zur Lokalisierung einer Person oder eines Objektes gemäß dem Oberbegriff von Anspruch 1 und ein Verfahren zur Lokalisierung einer Person oder eines Objektes in einem Überwachungsbereich mit einem Sicherheitssystem gemäß dem Oberbegriff von Anspruch 11.

Die Sensorik der funktionalen Sicherheit ist aktuell auf dem Stand, dass grundlegende physikalische Merkmale der Umgebung, beispielsweise Geometrieinformationen wie z.B. Abstände, Längen oder die Anwesenheit von Objekten an sich zuverlässig erfasst und in einfachen Sicherheitsfunktionen verwendet werden können. Dagegen sind höherwertige Informationen oder abgeleitete Bedeutungen, zum Beispiel die Information, um was für ein Objekt es sich handelt, in aller Regel nicht zuverlässig durch Sensoren ermittelbar und daher auch nicht sicherheitstechnisch nutzbar.

In diesem Sinne ist insbesondere die Information, ob es sich bei einem Objekt, um eine Person handelt oder nicht, für hochwertige Sicherheitsfunktionen interessant. Im Allgemeinen ist bereits eine Objektklassifikation ein sehr aufwändiges Verfahren, da hierfür in der Regel Bilddaten verwendet werden, die dann sehr aufwändig prozessiert werden müssen. Dies führt in der Regel zu teuren Sensoren mit oftmals erheblichen Latenzzeiten.

Optoelektronische Sicherheitssensoren, beispielsweise Laserscanner oder Lichtgitter erfassen sehr zuverlässig die Anwesenheit eines Objektes oder einer Person. Derartige Sicherheitssensoren finden eine große Verbreitung bei der Gefahrstellenabsicherung von Maschinen und ermöglichen die Implementierung sehr einfacher Sicherheitsfunktionen.

Maschinenbewegungen werden bei Detektion eines sicherheitsrelevanten Objekts in aller Regel gestoppt oder verlangsamt. Dabei bleibt unberücksichtigt, um was für ein Objekt es sich handelt oder wo genau im konfigurierten Schutzbereich sich das Objekt befindet. Diese Information ist im Allgemeinen auch gar nicht verfügbar bzw. nicht sicherheitstechnisch verwendbar.

Eine einfache Detektionsfunktion vorhandener Sicherheitssensoren erlaubt eine zuverlässige Absicherung von Gefahrstellen hat aber in alle Regel nachteilige Auswirkungen auf eine Produktivität einer Maschine. Unabhängig von einer Klasse des detektierten Objekts beispielsweise einer Person, einem Gegenstand oder einer Störung bzw. störenden Gegenständen und unabhängig von der genauen Position des Objektes muss sicherheitsgerichtet abgeschaltet werden, selbst wenn diese Reaktion in bestimmten Fällen nicht erforderlich wäre.

Insbesondere ein sicheres Wissen, dass es sich bei einem detektierten Objekt, um eine Person handelt oder nicht, würde eine sehr viel spezifischere Kontrolle einer potenziell gefährlichen Maschine ermöglichen.

Gemäß der DE 10 2012 102 236 A1 liefert eine Sensoreinheit zum Absichern eines gefährlichen Arbeitsbereichs einer automatisiert arbeitenden Maschine in definierten Zeitintervallen jeweils ein aktuelles 3D Bild von dem Arbeitsbereich. Eine Auswerteeinheit beinhaltet einen fehlersicheren Fremdobjektdetektor, einen Klassifizierer, einen Personenfolger und einen Vergleicher. Der Fremdobjektdetektor erzeugt in Abhängigkeit von dem jeweils aktuellen 3D Bild und in Abhängigkeit von einem definierten Schutzbereich ein erstes Signal mit einer ersten Positionsinformation, die für die Position eines Fremdobjekts in dem Schutzbereich repräsentativ ist. Der Klassifizierer versucht, das Fremdobjekt als Person zu identifizieren. Der Personenfolger verfolgt die identifizierte Person über eine Serie von jeweils aktuellen 3D Bildern und bestimmt nach jedem neuen 3D Bild eine zweite Positionsinformation, die die aktuelle Position der identifizierten Person repräsentiert. Wenn die Position des Fremdobjekts gemäß der ersten Positionsinformation und die Position der identifizierten Person verschieden voneinander sind, wird ein Steuersignal zum Anhalten der Maschine erzeugt.

Die DE 10 2017 123 295 A1 offenbart ein Sicherheitssystem zur Absicherung eines kooperativen Betriebs von Menschen, Robotern und Maschinen an einer technischen Anlage. Das Sicherheitssystem umfasst eine erste sicherheitsbezogene Einrichtung, die dazu ausgebildet ist, einen ersten Gefahrenbereich der technischen Anlage zu überwachen und die technische Anlage in einen gefahrlosen Zustand zu überführen, wenn eine Gefahrensituation erkannt wird. Das Sicherheitssystem ist ferner dazu ausgebildet, eine autonom arbeitende, technische Einheit zu identifizieren und die autonom arbeitende, technische Einheit zu registrieren, wenn diese eine definierte Bedingung erfüllt, sowie die Überwachung des ersten Gefahrenbereichs durch die erste sicherheitsbezogene Einrichtung als Reaktion auf die Registrierung zu beschränken.

Die EP 1 635 107 A1 offenbart eine Vorrichtung zum Steuern wenigstens einer sicherheitsrelevanten Funktion einer Maschine mit einer Maschinensteuerung zum Steuern der Bewegungen der Maschine, mit zumindest einem Sensor zum Erfassen eines Objekts innerhalb eines Überwachungsbereichs und mit einer Auswerteeinheit zum Festlegen eines Gefahrenbereichs, wobei zur Festlegung des Gefahrenbereichs die Auswerteeinheit mit der Maschinensteuerung gekoppelt ist, und die Auswerteeinheit zum Ableiten der für die Festlegung des Gefahrenbereichs erforderlichen Parameter aus den von der Maschinensteuerung zur Bewegungssteuerung der Maschine verwendeten Steuersignalen ausgebildet ist.

Eine Aufgabe der Erfindung besteht darin, eine sichere Unterscheidung von zulässiger Person oder zulässigem Objekt und unzulässiger Person oder unzulässigem Objekt zu ermöglichen. Damit sollen hochwertige Sicherheitsfunktionen wie zum Beispiel die gezielte Interaktion zwischen Person und Aktor oder zwischen Objekt und Aktor realisiert werden können.

Die Aufgabe wird gemäß Anspruch 1 gelöst durch ein Sicherheitssystem zur Lokalisierung einer Person oder eines Objektes in einem Überwachungsbereich, mit mindestens einer bewegbaren Maschine, mit einer Steuer- und Auswerteeinheit, mit mindestens einem Funkortungssystem, mit mindestens einem ortsauflösenden Sensor zur Positionsbestimmung der Person oder des Objektes, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes ermittelbar sind, wobei die Positionsdaten von den Funkstationen des Funkortungssystems an die Steuer- und Auswerteeinheit übermittelbar sind, und mittels dem ortsauflösenden Sensor Positionsdaten der Person oder des Objekts ermittelbar sind, die Steuer- und Auswerteeinheit ausgebildet ist, die Positionsdaten des Funkortungssystems und die Positionsdaten des Sensors zu vergleichen und bei einer Übereinstimmung geprüfte Positionsdaten zu bilden.

Die Aufgabe wird weiter gemäß Anspruch 11 gelöst durch ein Verfahren zur Lokalisierung einer Person oder eines Objektes in einem Überwachungsbereich mit einem Sicherheitssystem, mit mindestens einer bewegbaren Maschine, mit einer Steuer- und Auswerteeinheit, mit mindestens einem Funkortungssystem, mit mindestens einem ortsauflösenden Sensor zur Positionsbestimmung der Person oder des Objektes, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes ermittelt werden, wobei die Positionsdaten von den Funkstationen des Funkortungssystems an die Steuer- und Auswerteeinheit übermittelt werden, und mittels dem ortsauflösenden Sensor Positionsdaten der Person oder des Objekts ermittelt werden, die Steuer- und Auswerteeinheit die Positionsdaten des Funkortungssystems und die Positionsdaten des Sensors vergleicht und bei einer Übereinstimmung geprüfte Positionsdaten zu bilden.

Das Sicherheitssystem wird mindestens durch die Steuer- und Auswerteeinheit, das Funkortungssystem und den ortsauflösenden Sensor gebildet.

Die Erfindung beruht darauf, dass eine Position der Person oder des Objekts durch zwei voneinander unabhängige Teilsysteme eindeutig bestimmbar ist. Zum einen wird die Position über den ortsauflösenden Sensor ermittelt, sowie die Position, welche über das Funkortungssystem ermittelt wird. Damit wird die Position durch ein redundantes, insbesondere diversitäres System bestimmt.

Die Erfindung nutzt die Kombination von zwei diversitären Sensortechnologien aus, die sich im Hinblick auf die Detektionsaufgabe gegenseitig validieren.

Die erste der beiden Sensortechnologien ist das Funkortungssystem bzw. ein funkbasiertes Lokalisierungssystem mit dem die Positionen von Funktranspondern bis auf wenige Zentimeter genau bestimmt werden kann.

Die Funkortung basiert dabei beispielsweise auf einer Triangulation von mindestens einem Funktransponder an der Person oder dem Objekt. Hierzu sind mindestens drei Funkstationen notwendig die den Funktransponder erfassen können. Dabei ist dem Funkortungssystem der Abstand zwischen den jeweiligen Funkstationen bekannt.

Es handelt es sich vorzugsweise um ein Echtzeitortungssystem oder der englischen Entsprechung RTLS (Real-Time-Locating-System). Dabei ist der Funktransponder oder sind die Funktransponder an der Person oder dem Objekt angeordnet. Die Funkstationen erhalten die Funksignale von den Funktranspondern und können so deren Position und damit die Position der Person oder des Objekts bestimmen.

Dabei werden die Positionsdaten von dem Funkortungssystem, nämlich den Funkstationen an die Steuer- und Auswerteeinheit übermittelt.

Das zweite System ist der ortsauflösende Sensor bzw. ein ortsauflösendes Umfelderfassungssystem. Hierbei wird kein Funktransponder zur Lokalisierung benötigt. Dieses Umfelderfassungssystem bzw. der ortsauflösende Sensor liefert also Informationen, dass sich ein Objekt an einer bestimmten Position befindet und ermittelt dessen Position und Abmessung bzw. Kontur.

Die beiden diversitären Teilsysteme, nämlich das Funkortungssystem und der ortsauflösende Sensor ergänzen sich sehr gut im Hinblick auf die funktionalen Aufgaben Positionserfassung und können daher wechselseitig zur Validierung und damit zur sicherheitstechnischen Positionierung kombiniert werden.

Eine Validierung einer Objekt- oder Personenposition könnte also schematisch wie folgt ablaufen:
Das Funkortungssystem ermittelt die Position eines Objektes oder einer Person. Diese Informationen werden der Steuer- und Auswerteeinheit übermittelt.

Optional übermittelt die Steuer- und Auswerteeinheit ein Suchfeld in dem das Funkortungssystem die Person oder das Objekt geortet hat an den ortsauflösenden Sensor.

Der ortsauflösende Sensor prüft, ob in seinem Erfassungsbereich oder seinem Suchfeld eine Person oder ein Objekt vorhanden ist, optional mit dessen Größe und ggf. anderer detektierter Validierungsparameter wie Form, Geschwindigkeit usw. Der ortsauflösende Sensor übermittelt die erfassten Daten an die Steuer- und Auswerteeinheit.

Durch die Steuer- und Auswerteeinheit wird die erfasste Position der Person oder des Objektes des Funkortungssystems und die erfasste Position der Person oder des Objektes des ortsauflösenden Sensors miteinander verglichen.

Die Steuer- und Auswerteeinheit vergleicht optional die erfassten Merkmale bzw. die Kontur der Person oder des Objektes des ortsauflösenden Sensors mit den erfassten Merkmalen bzw. der Kontur der Person oder des Objektes des Funkortungssystems.

Somit kann die Personen- bzw. Objektposition wechselseitig durch die beiden diversitären Informationskanäle validiert und so für eine sicherheitstechnische Anwendung geprüft werden.

Die Erfindung ermöglicht eine sichere Positionserkennung von Personen oder Objekten in einem Überwachungsbereich und erschließt damit die Möglichkeit eine Sicherheitsfunktion spezifisch auf eine jeweilige Situation zuzuschneiden. Damit besteht die Möglichkeit eine Forderung nach einer Risikominderung zu erfüllen, ohne eine Produktivität eines Automatisierungsprozesses zu beeinträchtigen.

Die physikalischen Wirkprinzipien und deren Stärken und Schwächen der diversitären Sensoren sind vorteilhaft komplementär. Funkortungssysteme weisen beispielsweise aufgrund des Wirkprinzips eine natürliche Immunität gegenüber Fremdlicht auf. Weiter sind Funkortungssysteme wenig empfindlich bei störenden Objekten wie Staub, Spänen oder Nebel. Zudem ist es durch Funkortungssysteme möglich durch nichtmetallische Wände hindurchzusehen, so dass eine besonders frühe Erkennung von Personen oder Objekten möglich ist. Diese erlaubt eine qualitativ hochwertige Optimierung von Prozessen bei steter Gewährleistung der Arbeitssicherheit.

Bei dem Objekt kann es sich um stationäre oder mobile Gegenstände handeln. Beispielsweise handelt es sich bei dem Objekt um Transportmaterial oder Verarbeitungsmaterial.

Bei der bewegbaren Maschine bzw. mobilen Maschine kann es sich beispielsweise um einen Roboter mit bewegbaren Roboterarmen handeln. Die bewegbare Maschine weist somit einen Antrieb auf und kann in verschiedenen Richtungen bewegt werden.

Die Erfindung besteht in anderen Worten darin, eine klassische Sicherheitsfunktion mit Anwesenheitsdetektion durch den ortsauflösenden Sensor und sicherheitsgerichteter Abschaltung durch eine sichere Positionsermittlung zu ergänzen. Dabei dient die klassische Sicherheitsfunktion durch den ortsauflösenden Sensor als Rückfall-Funktion, die einspringt, falls die sichere Positionierung fehlschlägt.

In Weiterbildung der Erfindung ist die Steuer- und Auswerteeinheit ausgebildet, die Positionsdaten des Funkortungssystems und die Positionsdaten des Sensors zu vergleichen und bei einer Übereinstimmung die Person oder das Objekt mit dem Funktransponder in einem Schutzfeld des ortsauflösenden Sensors zuzulassen und kein Objektfeststellungssignal auszugeben, wodurch die bewegbare Maschine in einem aktiven Zustand ist.

Wenn mit sicherheitstechnisch erforderlicher Zuverlässigkeit die Position eines Objektes oder einer Person im Schutzfeld erfasst werden konnte, wird die klassische Sicherheitsfunktion überbrückt (Muting) und eine Maschinensteuerung kann optional für die situationsbezogene Absicherung der Maschine auf die Positionsdaten des Objektes oder der Person zurückgreifen.

Gemäß der Weiterbildung stellt der ortsauflösende Sensor, der stationär zur Absicherung der Maschine bzw. des Aktors verwendet wird, zusätzlich seine Messdaten bereit, um eine Positionierung der Person oder des Objektes im Schutzfeld zu ermöglichen. Auf diese Art wird bei Vorhandensein der Positionsdaten des Funkortungssystems und der Positionsdaten des ortsauflösenden Sensors eine Validierung der Position der Person oder des Objektes ermöglicht und damit eine sicherheitstechnische Verwendung der Positionsinformation zugänglich.

Zusätzlich zu dieser redundanten und diversitären Sensorstruktur muss für die sicherheitstechnische Verwendbarkeit auch der Fehlerfall geprüft werden, dass die Positionsdaten des Funkortungssystems fehlen oder die Positionsdaten des ortsauflösenden Sensors nicht mit den Positionsdaten des Funkortungssystems übereinstimmen.

Daher ist gemäß vorliegender Erfindung eine validierungsabhängige Überbrückung bzw. Muting der Sicherheitsfunktion der primären Sicherheitsfunktion, also der Schutzfeldüberwachung durch den ortsauflösenden Sensor vorgesehen, wonach bei einer Übereinstimmung der Positionsdaten des ortsauflösenden Sensors und des Funkortungssystems die Person oder das Objekt mit dem Funktransponder in einem Schutzfeld des ortsauflösenden Sensors zuzulassen ist und kein Objektfeststellungssignal auszugeben ist, wodurch der Aktor in einem aktiven Zustand ist.

Entscheidend ist dabei, dass die primäre Sicherheitsfunktion solange überbrückt bleibt, wie die Validierung der Positionsdaten des Funkortungssystems und die Positionsdaten des ortsauflösenden Sensors erfolgreich ist.

Die Validierung der beiden unabhängigen Positionsdaten bzw. Positionsinformationen wird von der Steuer- und Auswerteeinheit durchgeführt. Die Steuer- und Auswerteeinheit ist optional eine funktionssichere Steuer- und Auswerteeinheit. Die Steuer- und Auswerteeinheit weist beispielsweise Mittel zur Fehleraufdeckung auf. Diese Mittel sind beispielsweise Mittel zur Testung, beispielsweise ein redundanter und/oder diversitärer Aufbau mit zwei Kanälen zur gegenseitigen Prüfung der ermittelten Ergebnisse und der Positionsdaten.

In Weiterbildung der Erfindung sind der ortsauflösende Sensor und die Funkstationen stationär angeordnet. Damit handelt es sich um eine stationäre Anwendung, wobei die bewegbare Maschine beispielsweise ein Roboter, eine Handhabungsmaschine oder dergleichen ist. Bei der bewegbaren Maschine kann es sich auch um eine Verarbeitungsmaschine, beispielsweise eine Presse oder Stanze handeln, welche ebenfalls in direkter Interaktion mit einer Person oder einem Objekt stehen kann.

In Weiterbildung der Erfindung sind der ortsauflösende Sensor und die Funkstationen mobil an einer bewegbaren Maschine angeordnet. Damit handelt es sich um eine mobile Anwendung, wobei die bewegbare Maschine beispielsweise ein Fahrzeug, insbesondere ein fahrerloses Fahrzeug oder dergleichen ist. Das Fahrzeug kann ebenfalls in direkter Interaktion mit einer Person oder einem Objekt stehen.

In Weiterbildung der Erfindung werden aufgrund der Positionsdaten des Funkortungssystems und der Positionsdaten des Sensors geprüfte Positionsdaten gebildet, wobei die Steuer- und Auswerteeinheit ausgebildet ist die geprüften Positionsdaten mit Referenzdaten zu vergleichen und bei einer Übereinstimmung mittels der Steuer- und Auswerteeinheit eine Veränderung der Sicherheitsfunktion des Sicherheitssystems erfolgt, wobei der Aktor in einer ungefährlichen Betriebsart betrieben ist.

Gemäß der Weiterbildung der Erfindung kann eine sichere Kollaboration zwischen bewegbarer Maschine bzw. Aktor und Person realisiert werden. Abhängig von der Position, Geschwindigkeit, Bewegungsrichtung und/oder dem Abstand der Person wird die bewegbare Maschine bzw. der Aktor abgebremst, gestoppt, umgelenkt und/oder wieder beschleunigt.

Insbesondere wenn sich die Person oder das Objekt in einem gefahrbringenden Bereich der bewegbaren Maschine befindet wird die bewegbare Maschine in einer ungefährlichen Betriebsart betrieben.

Sicherheitskritische Fehlerfälle wie zum Beispiel der Verlust des Funksignals, z. B. weil kein Funktransponder vorhanden ist, weil eine Energieversorgung des Funktransponders ausgefallen ist oder weil beispielsweise der Funktransponder abgeschirmt wird oder eine fehlerhafte Lokalisierung der Person oder des Objektes durch den ortsauflösenden Sensors oder die fehlerhafte Verarbeitung von Positionsdaten durch die Steuer- und Auswerteeinheit, führen zu einem sicherheitsgerichteten Abschalten durch die primäre Sicherheitsfunktion, nämlich durch die Steuer- und Auswerteeinheit falls keine gültigen Positionsdaten von dem ortsauflösenden Sensor vorliegen.

In Weiterbildung der Erfindung ist die Steuer- und Auswerteeinheit ausgebildet ist basierend auf den geprüften Positionsdaten der Steuer- und Auswerteeinheit eine veränderte Sicherheitsfunktion einzustellen, wobei abstandsabhängig von der Person zur bewegbaren Maschine eine Bewegung der bewegbaren Maschine durch die Steuer- und Auswerteeinheit verändert bzw. beeinflusst wird.

Beispielsweise wird mittels der Steuer- und Auswerteeinheit eine veränderte Sicherheitsfunktion eingestellt, wobei die Steuer- und Auswerteeinheit die geprüfte Positionsinformation in einen sicheren Abstand von der Gefahrenstelle umrechnet und abstandsabhängig von der Person eine Bewegung der bewegbaren Maschine beeinflusst.

Gemäß der Weiterbildung der Erfindung kann ebenfalls eine sichere Kollaboration zwischen bewegbarer Maschine bzw. Aktor und Person realisiert werden. Abhängig von der Position, Geschwindigkeit, Bewegungsrichtung und/oder dem Abstand der Person wird die bewegbare Maschine bzw. der Aktor abgebremst, gestoppt, umgelenkt und/oder wieder beschleunigt.

In Weiterbildung der Erfindung ist das Funkortungssystem ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20 % der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

An der Person oder dem Objekt muss minimal nur ein einziger Funktransponder angeordnet sein, der von mindestens drei stationär angeordneten Funkstationen erfasst wird, wobei der Abstand der Funkstationen bekannt ist.

Vorzugsweise sind eine Vielzahl, beispielsweise mehr als drei Funkstationen angeordnet, welche mindestens einen Teil des Bewegungsbereichs der Person oder des Objektes überwachen.

Es können auch mindestens zwei oder mehr Funktransponder an der Person oder dem Objekt angeordnet sein. Dadurch kann die Position der Person oder des Objektes genauer identifiziert werden und auch die Ausrichtung der Person oder des Objektes im Stillstand erfasst werden, wenn die Anordnung der Funktransponder an der Person oder dem Objekt bekannt ist.

In Weiterbildung der Erfindung ist der ortsauflösende Sensor ein optoelektronischer Sensor, ein Ultraschallsensor oder ein Radarsensor.

Bei einem Lichtlaufzeitsensor wird das von einem Lichtsender ausgesendete Licht welches von der Person oder dem Objekt remittiert wird von einem Lichtempfänger empfangen und die Lichtlaufzeit vom Aussenden bis zum Empfangen von der Person oder dem Objekt wird ausgewertet, wodurch die Entfernung zu der Person oder dem Objekt bestimmt werden kann.

Jedoch kann der Sensor auch ein Ultraschallsensor, oder ein Radar-Sensor sein.

Ein Ultraschallsensor sendet Ultraschall aus und wertet die reflektierten Schallwellen, also die Echosignale aus. Dabei werden Frequenzen ab 16 kHz verwendet. Dabei können Detektionsreichweiten von wenigen Zentimetern bis vielen Metern realisiert werden.

Ein Radarsensor ist ein Sensor, der ein sogenanntes Primärsignal als gebündelte elektromagnetische Welle aussendet, die von Personen oder Objekten reflektierten Echos als Sekundärsignal empfängt und nach verschiedenen Kriterien auswertet. Dabei handelt es sich um eine Ortung, nämlich der Bestimmung von Entfernung und Winkel.

Aus den empfangenen, von der Person oder dem Objekt reflektierten Wellen können Positionsinformationen bzw. die Position gewonnen werden. Wie bereits erwähnt, kann der Winkel bzw. die Richtung zum Objekt und die Entfernung zur Person oder dem Objekt aus der Zeitverschiebung zwischen Senden und Empfangen des Signals ermittelt werden. Weiter kann auch die Relativbewegung zwischen Sender und Person bzw. Objekt festgestellt werden, beispielsweise durch eine einfache Mehrfachmessung in zeitlichen Abständen. Das Aneinanderreihen einzelner Messungen liefert die Wegstrecke und die Absolutgeschwindigkeit des Objektes. Bei entsprechender Auflösung des Radarsensors können Konturen der Person bzw. des Objektes erkannt werden.

Eine Abstrahlung von dem Radarsensor erfolgt beispielsweise aufgrund des Antennenentwurfs weitgehend gebündelt in eine Richtung. Die Strahlungscharakteristik der Antenne hat dann eine sogenannte Keulenform.

Die Wellenlänge des Radars liegt im Bereich der Funkwellen im Kurz- bis Mikrowellenbereich. Ein Pulsradarsensor sendet Impulse mit einer typischen Dauer im unteren Mikrosekundenbereich und wartet dann auf Echos. Die Laufzeit des Impulses ist die Zeit zwischen dem Senden und dem Empfang des Echos. Sie wird zur Entfernungsbestimmung genutzt.

Eine Richtung des Abtaststrahles eines Impulsradarsensors kann statt durch die Ausrichtung der Antenne bzw. der Antennen auch elektronisch durch phasengesteuerte Antennenarrays bewirkt werden. Damit können in schnellem Wechsel mehrere Objekte angepeilt und quasi simultan verfolgt werden.

Der Radarsensor arbeitet mit einer Leistung von beispielsweise ca. 10 mW. Diese Leistung ist so gering, dass keine gesundheitlichen Auswirkungen bestehen. Die für diese Anwendung zugelassene Radarfrequenz liegt beispielsweise im Bereich von 76-77 GHz, entsprechend einer Wellenlänge von etwa 4 mm.

In Weiterbildung der Erfindung ist der ortsauflösende Sensor zur mindestens flächigen Überwachung eines Überwachungsbereiches ausgebildet.

Der ortsauflösende Sensor zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

In Weiterbildung der Erfindung ist der ortsauflösende Sensor zur mindestens räumlichen Überwachung eines Überwachungsbereiches ausgebildet.

In Weiterbildung der Erfindung ist der optoelektronische Sensor ein Laserscanner, ein Sicherheitslaserscanner, eine 3D-Kamera, eine Stereokamera oder eine Lichtlaufzeitkamera.

Zur Positionserfassung überwacht der ortsauflösende Sensor, der Laserscanner, der Sicherheitslaserscanner, die 3D-Kamera, die Stereokamera oder die Lichtlaufzeitkamera einen zweidimensionalen oder dreidimensionalen Überwachungsbereich bzw. eine Messdatenkontur. Dabei kann es sich auch synonym um ein Überwachungsfeld handeln.

In der Sicherheitstechnik eingesetzte Sicherheitssysteme müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff ,funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Das Sicherheitssystem kann daher eigensicher ausgebildet sein. Das Sicherheitssystem und/oder mindestens ein sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger bzw. räumlicher Schutzbereich überwacht werden kann.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Figur 1 und 2 jeweils ein Sicherheitssystem in einer schematischen Darstellung;
Figur 3 ein Sicherheitssystem in einer Blockdarstellung.

In den nachfolgenden Figuren sind identische Teile mit identischen Bezugszeichen versehen.

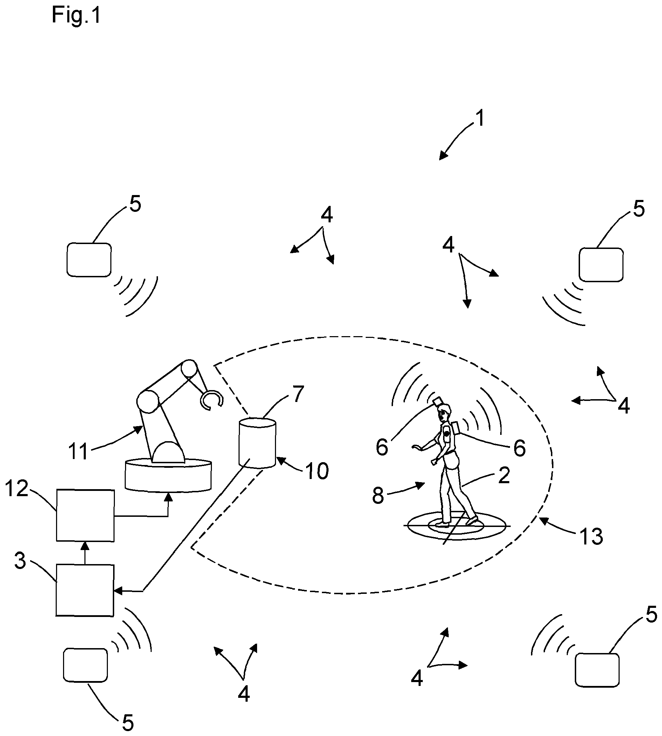

Figur 1 zeigt ein Sicherheitssystem 1 zur Lokalisierung einer Person 2 oder eines Objektes 8 in einem Überwachungsbereich, mit einer bewegbaren Maschine 11, mit einer Steuer- und Auswerteeinheit 3, mit mindestens einem Funkortungssystem 4, mit mindestens einem ortsauflösenden Sensor 7 zur Positionsbestimmung der Person 2 oder des Objektes 8, wobei das Funkortungssystem 4 angeordnete Funkstationen 5 aufweist, wobei an der Person 2 oder dem Objekt 8 mindestens ein Funktransponder6 angeordnet ist, wobei mittels dem Funkortungssystem 4 Positionsdaten der Person 2 oder des Objektes 8 ermittelbar sind, wobei die Positionsdaten von den Funkstationen 5 des Funkortungssystems 4 an die Steuer- und Auswerteeinheit 3 übermittelbar sind, und mittels dem ortsauflösenden Sensor 7 Positionsdaten der Person 2 oder des Objekts 8 ermittelbar sind, die Steuer- und Auswerteeinheit 3 ausgebildet ist, die Positionsdaten des

Funkortungssystems 4 und die Positionsdaten des ortsauflösenden Sensors 7 zu vergleichen und bei einer Übereinstimmung geprüfte Positionsdaten zu bilden.

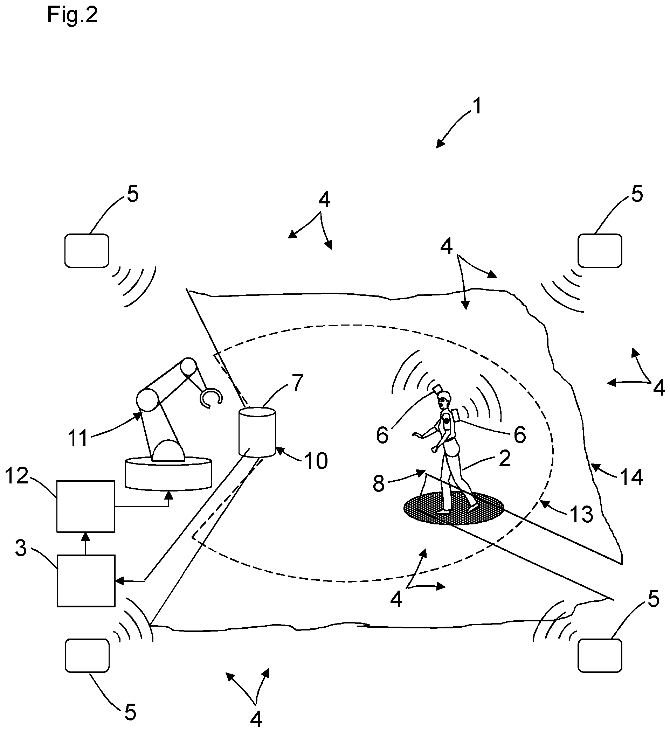

Optional ist gemäß Figur 2 die Steuer- und Auswerteeinheit 3 ausgebildet, die Positionsdaten des Funkortungssystems 4 und die Positionsdaten des ortsauflösenden Sensors 7 zu vergleichen und bei einer Übereinstimmung die Person 2 oder das Objekt 8 mit dem Funktransponder 6 in einem Schutzfeld 13 des ortsauflösenden Sensors 7 zuzulassen und kein Objektfeststellungssignal auszugeben, wodurch die bewegbare Maschine 11 in einem aktiven Zustand ist.

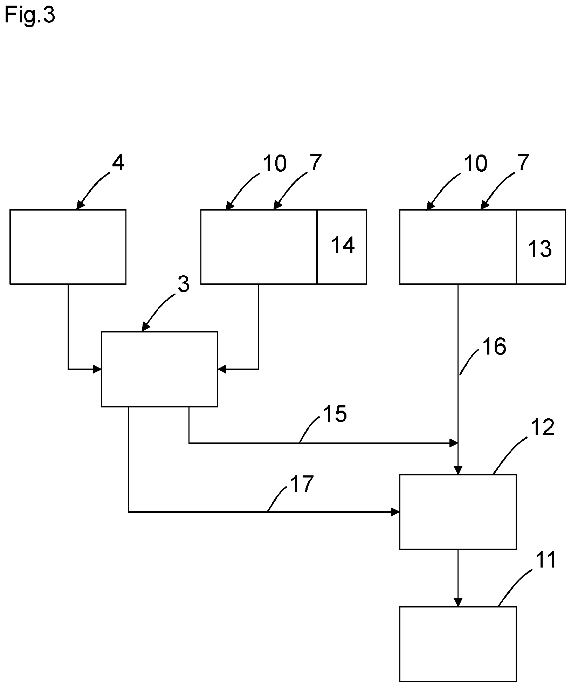

Figur 3 zeigt eine Blockstruktur mit den verschiedenen Signalen. Gemäß Figur 3 wird eine klassische Sicherheitsfunktion mit Anwesenheitsdetektion durch den ortsauflösenden Sensor 7 und sicherheitsgerichteter Abschaltung 16 mit einer sicheren Positionsermittlung ergänzt. Zur Positionserfassung überwacht der Laserscanner 10 gemäß Figur 3 und Figur 2 einen zweidimensionalen Überwachungsbereich bzw. eine Messdatenkontur 14. Dabei kann es sich auch synonym um ein Überwachungsfeld handeln. Dabei dient die klassische Sicherheitsfunktion durch den ortsauflösenden Sensor 7 als Rückfall-Funktion, die einspringt, falls die sichere Positionierung fehlschlägt. Falls jedoch mit sicherheitstechnisch erforderlicher Zuverlässigkeit die Position eines Objektes oder einer Person im Schutzfeld 13 erfasst werden konnte, wird die klassische Sicherheitsfunktion mittels eine Mutingsignals 15 überbrückt und eine Maschinensteuerung 12 kann optional für die situationsbezogene Absicherung der bewegbaren Maschine 11 auf sichere bzw. geprüfte Positionsdaten 17 des Objektes 8 oder der Person 2 zurückgreifen.

Gemäß Figur 1 stellt der ortsauflösende Sensor 7, der stationär zur Absicherung der bewegbaren Maschine 11 bzw. des Aktors verwendet wird, zusätzlich seine Messdaten bereit, um eine Positionierung der Person 2 oder des Objektes 8 im Schutzfeld 13 zu ermöglichen. Auf diese Art wird bei Vorhandensein der Positionsdaten des Funkortungssystems 4 und der Positionsdaten des ortsauflösenden Sensors 7 eine Validierung der Position der Person 2 oder des Objektes 8 ermöglicht und damit eine sicherheitstechnische Verwendung der Positionsinformation zugänglich.

Zusätzlich zu dieser redundanten und diversitären Sensorstruktur muss für die sicherheitstechnische Verwendbarkeit auch der Fehlerfall geprüft werden, dass die Positionsdaten des Funkortungssystems 4 fehlen oder die Positionsdaten des ortsauflösenden Sensors 7 nicht mit den Positionsdaten des Funkortungssystems 4 übereinstimmen.

Daher ist gemäß Figur 1 eine validierungsabhängige Überbrückung bzw. Muting der Sicherheitsfunktion der primären Sicherheitsfunktion, also der Schutzfeldüberwachung durch den ortsauflösenden Sensor 7 vorgesehen, wonach bei einer Übereinstimmung der Positionsdaten des ortsauflösenden Sensors 7 und des Funkortungssystems 4 die Person 2 oder das Objekt 8 mit dem Funktransponder in einem Schutzfeld des ortsauflösenden Sensors zuzulassen und kein Objektfeststellungssignal auszugeben, wodurch die bewegbare Maschine 11 oder der Aktor in einem aktiven Zustand ist.

Entscheidend ist dabei, dass die primäre Sicherheitsfunktion solange überbrückt bleibt, wie die Validierung der Positionsdaten des Funkortungssystems 4 und die Positionsdaten des ortsauflösenden Sensors 7 erfolgreich ist.

Die Validierung der beiden unabhängigen Positionsdaten bzw. Positionsinformationen wird von der Steuer- und Auswerteeinheit 3 durchgeführt. Die Steuer- und Auswerteeinheit 3 ist optional eine funktionssichere Steuer- und Auswerteeinheit 3. Die Steuer- und Auswerteeinheit 3 weist beispielsweise Mittel zur Fehleraufdeckung auf. Diese Mittel sind beispielsweise Mittel zur Testung, beispielsweise ein redundanter und/oder diversitärer Aufbau mit zwei Kanälen zur gegenseitigen Prüfung der ermittelten Ergebnisse und der Positionsdaten.

Gemäß Figur 1 sind der ortsauflösende Sensor 7 und die Funkstationen 5 stationär angeordnet. Damit handelt es sich um eine stationäre Anwendung, wobei die bewegbare Maschine 11 beispielsweise ein Roboter, eine Handhabungsmaschine oder dergleichen ist. Bei der bewegbaren Maschine 11 kann es sich auch um eine Verarbeitungsmaschine, beispielsweise eine Presse oder Stanze handeln, welche ebenfalls in direkter Interaktion mit einer Person 2 oder einem Objekt 8 stehen kann.

Gemäß einer nicht dargestellten Ausführung sind der ortsauflösende Sensor und die Funkstationen mobil an einer bewegbaren Maschine angeordnet. Damit handelt es sich um eine mobile Anwendung, wobei die bewegbare Maschine beispielsweise ein Fahrzeug, insbesondere ein fahrerloses Fahrzeug oder dergleichen ist. Das Fahrzeug kann ebenfalls in direkter Interaktion mit einer Person oder einem Objekt stehen.

Gemäß Figur 1 werden aufgrund der Positionsdaten des Funkortungssystems 4 und der Positionsdaten des ortsauflösenden Sensors 7 geprüfte Positionsdaten gebildet, wobei die Steuer- und Auswerteeinheit 3 ausgebildet ist die geprüften Positionsdaten mit Referenzdaten zu vergleichen und bei einer Übereinstimmung mittels der Steuer- und Auswerteeinheit eine Veränderung der Sicherheitsfunktion des Sicherheitssystems 1 erfolgt, wobei die bewegbare Maschine 11 bzw. der Aktor in einer ungefährlichen Betriebsart betrieben ist.

Gemäß Figur 1 kann eine sichere Kollaboration zwischen bewegbarer Maschine 11 bzw. Aktor und der Person 2 realisiert werden. Abhängig von der Position, Geschwindigkeit, Bewegungsrichtung und/oder dem Abstand der Person 2 wird die bewegbare Maschine 11 bzw. der Aktor abgebremst, gestoppt, umgelenkt und/oder wieder beschleunigt.

Insbesondere wenn sich die Person 2 oder das Objekt 8 in einem gefahrbringenden Bereich der bewegbaren Maschine 11 befindet wird die bewegbare Maschine 11 in einer ungefährlichen Betriebsart betrieben.

Sicherheitskritische Fehlerfälle wie zum Beispiel der Verlust des Funksignals, z. B. weil kein Funktransponder 6 vorhanden ist, weil eine Energieversorgung des Funktransponders 6 ausgefallen ist oder weil beispielsweise der Funktransponder 6 abgeschirmt wird oder eine fehlerhafte Lokalisierung der Person 2 oder des Objektes 8 durch den ortsauflösenden Sensors 7 oder die fehlerhafte Verarbeitung von Positionsdaten durch die Steuer- und Auswerteeinheit 3, führen zu einem sicherheitsgerichteten Abschalten durch die primäre Sicherheitsfunktion, nämlich durch die Steuer- und Auswerteeinheit 3 falls keine gültigen Positionsdaten von dem ortsauflösenden Sensor 7 vorliegen.

Gemäß Figur 2 ist das Funkortungssystem 4 optional ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

An der Person 2 oder dem Objekt 8 muss minimal nur ein einziger Funktransponder 6 angeordnet sein, der von mindestens drei stationär angeordneten Funkstationen 5 erfasst wird, wobei der Abstand der Funkstationen 5 bekannt ist.

Vorzugsweise sind eine Vielzahl, beispielsweise mehr als drei Funkstationen 5 angeordnet, welche mindestens einen Teil des Bewegungsbereichs der Person 2 oder des Objektes 8 überwachen.

Es können auch mindestens zwei oder mehr Funktransponder 6 an der Person 2 oder dem Objekt 8 angeordnet sein. Dadurch kann die Position der Person 2 oder des Objektes 8 genauer identifiziert werden und auch die Ausrichtung der Person 2 oder des Objektes 8 im Stillstand erfasst werden, wenn die Anordnung der Funktransponder 6 an der Person 2 oder dem Objekt 8 bekannt ist.

Gemäß Figur 1 ist der ortsauflösende Sensor 7 ein optoelektronischer Sensor, ein Ultraschallsensor oder ein Radarsensor.

Bei einem Lichtlaufzeitsensor als optoelektronischer Sensor wird das von einem Lichtsender ausgesendete Licht welches von der Person 2 oder dem Objekt 8 remittiert wird von einem Lichtempfänger empfangen und die Lichtlaufzeit vom Aussenden bis zum Empfangen von der Person 2 oder dem Objekt 8 wird ausgewertet, wodurch die Entfernung zu der Person 2 oder dem Objekt 8 bestimmt werden kann.

Jedoch kann der ortsauflösende Sensor 7 auch ein Ultraschallsensor, oder ein Radar-Sensor sein.

Gemäß Figur 1 ist der ortsauflösende Sensor 7 zur mindestens flächigen Überwachung eines Überwachungsbereiches ausgebildet.

Der ortsauflösende Sensor 7 zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der ortsauflösende Sensor 7 Messwerte mit Distanzangaben und Winkelangaben aus. Beispielsweise wird die Entfernung mittels Lichtlaufzeitverfahren oder Triangulationsverfahren ermittelt.

Gemäß einer nicht dargestellten Ausführungsform ist der ortsauflösende Sensor zur mindestens räumlichen Überwachung eines Überwachungsbereiches ausgebildet.

Gemäß Figur 1 kann der optoelektronische Sensor ein Laserscanner 10 bzw. ein Sicherheitslaserscanner sein.

Gemäß einer nicht dargestellten Ausführungsform ist der ortsauflösende Sensor eine 3D-Kamera, eine Stereokamera oder eine Lichtlaufzeitkamera.

### Bezugszeichen:

1 Sicherheitssystem
2 Person
3 Steuer- und Auswerteeinheit
4 Funkortungssystem
5 Funkstationen
6 Funktransponder
7 ortsauflösender Sensor
8 Objekt
10 Laserscanner
11 bewegbare Maschine
12 Maschinensteuerung
13 Schutzfeld
14 Messkontur
15 Mutingsignal
16 sicherheitsgerichtete Abschaltung
17 sichere oder geprüfte Positionsdaten

## Patentansprüche

1. Sicherheitssystem (1) zur Lokalisierung mindestens einer Person (2) oder mindestens eines Objektes (8) in einem Überwachungsbereich, mit mindestens einer bewegbaren Maschine (11), mit einer Steuer- und Auswerteeinheit (3), mit mindestens einem Funkortungssystem (4), mit mindestens einem ortsauflösenden Sensor (7) zur Positionsbestimmung der Person (2) oder des Objektes (8), wobei das Funkortungssystem (4) angeordnete Funkstationen (5) aufweist, wobei an der Person (2) oder dem Objekt (8) mindestens ein Funktransponder (6) angeordnet ist,
wobei mittels dem Funkortungssystem (4) Positionsdaten der Person (2) oder des Objektes (8) ermittelbar sind,
wobei die Positionsdaten von den Funkstationen (5) des Funkortungssystems (4) an die Steuer- und Auswerteeinheit (3) übermittelbar sind,
und mittels dem ortsauflösenden Sensor (7) Positionsdaten der Person (2) oder des Objekts (8) ermittelbar sind,
**dadurch gekennzeichnet, dass** die Steuer- und Auswerteeinheit (3) ausgebildet ist, die Positionsdaten des Funkortungssystems (4) und die Positionsdaten des Sensors (7) zu vergleichen und bei einer Übereinstimmung geprüfte Positionsdaten zu bilden.

2. Sicherheitssystem (1) nach Anspruch 1, **dadurch gekennzeichnet, dass** die Steuer- und Auswerteeinheit (3) ausgebildet ist, die Positionsdaten des Funkortungssystems (4) und die Positionsdaten des Sensors (7) zu vergleichen und bei einer Übereinstimmung die Person oder das Objekt mit dem Funktransponder in einem Schutzfeld des ortsauflösenden Sensors zuzulassen und kein Objektfeststellungssignal auszugeben, wodurch die bewegbare Maschine (11) in einem aktiven Zustand ist.

3. Sicherheitssystem (1) nach mindestens einem der vorhergehenden Ansprüche, **dadurch gekennzeichnet, dass** der ortsauflösende Sensor (7) und die Funkstationen (5) stationär angeordnet sind oder mobil an einer bewegbaren Maschine (11) angeordnet sind.

4. Sicherheitssystem (1) nach mindestens einem der vorhergehenden Ansprüche, **dadurch gekennzeichnet, dass** aufgrund der Positionsdaten des Funkortungssystems (4) und der Positionsdaten des Sensors (7) geprüfte Positionsdaten gebildet werden, wobei die Steuer- und Auswerteeinheit ausgebildet ist die geprüften Positionsdaten mit Referenzdaten zu vergleichen und bei einer Übereinstimmung mittels der Steuer- und Auswerteeinheit (3) eine Veränderung der Sicherheitsfunktion des Sicherheitssystems (1) erfolgt, wobei der Aktor in einer ungefährlichen Betriebsart betrieben ist.

5. Sicherheitssystem (1) nach mindestens einem der vorhergehenden Ansprüche, **dadurch gekennzeichnet, dass** die Steuer- und Auswerteeinheit (3) ausgebildet ist basierend auf den geprüften Positionsdaten der Steuer- und Auswerteeinheit eine veränderte Sicherheitsfunktion einzustellen, wobei abstandsabhängig von der Person zur bewegbaren Maschine eine Bewegung der bewegbaren Maschine durch die Steuer- und Auswerteeinheit verändert bzw. beeinflusst wird.

6. Sicherheitssystem (1) nach mindestens einem der vorhergehenden Ansprüche, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

7. Sicherheitssystem (1) nach mindestens einem der vorhergehenden Ansprüche, **dadurch gekennzeichnet, dass** der ortsauflösende Sensor (7) ein optoelektronischer Sensor, ein Ultraschallsensor oder ein Radarsensor ist.

8. Sicherheitssystem (1) nach mindestens einem der vorhergehenden Ansprüche, **dadurch gekennzeichnet, dass** der ortsauflösende Sensor (7) zur mindestens flächigen Überwachung eines Überwachungsbereiches ausgebildet ist.

9. Sicherheitssystem (1) nach mindestens einem der vorhergehenden Ansprüche, **dadurch gekennzeichnet, dass** der ortsauflösende Sensor (7) zur mindestens räumlichen Überwachung eines Überwachungsbereiches ausgebildet ist

10. Sicherheitssystem (1) nach mindestens einem der vorhergehenden Ansprüche, **dadurch gekennzeichnet, dass** der optoelektronische Sensor ein Laserscanner (10), ein Sicherheitslaserscanner, eine 3D-Kamera, eine Stereokamera oder eine Lichtlaufzeitkamera ist.

11. Verfahren zur Lokalisierung einer Person (2) oder eines Objektes (8) in einem Überwachungsbereich mit einem Sicherheitssystem (1), mit mindestens einer bewegbaren Maschine (11), mit einer Steuer- und Auswerteeinheit (3), mit mindestens einem Funkortungssystem (4), mit mindestens einem ortsauflösenden Sensor (7) zur Positionsbestimmung der Person (2) oder des Objektes (8),
wobei das Funkortungssystem (4) angeordnete Funkstationen (5) aufweist, wobei an der Person (2) oder dem Objekt (8) mindestens ein Funktransponder (6) angeordnet ist,
wobei mittels dem Funkortungssystem (4) Positionsdaten der Person (2) oder des Objektes (8) ermittelt werden,
wobei die Positionsdaten von den Funkstationen (5) des Funkortungssystems (4) an die Steuer- und Auswerteeinheit (3) übermittelt werden,
und mittels dem ortsauflösenden Sensor (7) Positionsdaten der Person (2) oder des Objekts (8) ermittelt werden,
**dadurch gekennzeichnet, dass** die Steuer- und Auswerteeinheit (3) die Positionsdaten des Funkortungssystems (4) und die Positionsdaten des Sensors (7) vergleicht und bei einer Übereinstimmung geprüfte Positionsdaten zu bilden.

## Claims

1. A safety system (1) for localizing at least one person (2) or at least one object (8) in a monitored zone having at least one movable machine (11), having a control and evaluation unit (3), having at least one radio location system (4), and having at least one spatially resolving sensor (7) for the position determination of the person (2) or object (8),
wherein the radio location system (4) has arranged radio stations (5); wherein at least one radio transponder (6) is arranged at the person (2) or object (8);
wherein position data of the person (2) or object (8) can be determined by means of the radio location system (4);
wherein the position data can be transmitted from the radio stations (5) of the radio location system (4) to the control and evaluation unit (3),
and position data of the person (2) or of the object (8) can be determined by means of the spatially resolving sensor (7),
**characterized in that** the control and evaluation unit (3) is configured to compare the position data of the radio location system (4) and the position data of the sensor (7) and to form checked position data on an agreement.

2. A safety system (1) in accordance with claim 1, **characterized in that**, the control and evaluation unit (3) is configured to compare the position data of the radio location system (4) and the position data of the sensor (7) and, on agreement, to permit the person or the object having the radio transponder in a protected field of the spatially resolving sensor and not to output any object determination signal, whereby the movable machine (11) is in an active state.

3. A safety system (1) in accordance with at least one of the preceding claims, **characterized in that** the spatially resolving sensor (7) and the radio stations (5) are arranged as stationary or are arranged as mobile at a movable machine (11).

4. A safety system (1) in accordance with at least one of the preceding claims, **characterized in that** checked position data are formed on the basis of the position data of the radio location system (4) and the position data of the sensor (7), with the control and evaluation unit being configured to compare the checked position data with reference data and, on an agreement, a change of the safety function of the safety system (1) taking place by means of the control and evaluation unit (3), with the actuator being operated in a non-dangerous operating mode.

5. A safety system (1) in accordance with at least one of the preceding claims, **characterized in that** the control and evaluation unit (3) is configured to set a changed safety function on the basis of the checked position data of the control and evaluation unit, with a movement of the movable machine being changed or influenced by the control and evaluation unit in dependence on the distance of the person from the movable machine.

6. A safety system (1) in accordance with least one of the preceding claims, **characterized in that** the radio location system (4) is an ultrawide band radio location system, with the frequency used being in the range from 3.1 GHz to 10.6 GHz, with the transmission energy amounting to a maximum of 0.5 mW per radio station (5).

7. A safety system (1) in accordance with at least one of the preceding claims, **characterized in that** the spatially resolving sensor (7) is an optoelectronic sensor, an ultrasonic sensor, or a radio sensor.

8. A safety system (1) in accordance with at least one of the preceding claims, **characterized in that** the spatially resolving sensor (7) is configured for an at least areal monitoring of a monitored zone.

9. A safety system (1) in accordance with at least one of the preceding claims, **characterized in that** the spatially resolving sensor (7) is configured for at least spatial monitoring of a monitored zone.

10. A safety system (1) in accordance with at least one of the preceding claims, **characterized in that** the optoelectronic sensor is a laser scanner (10), a safety laser scanner, a 3D camera, a stereo camera, or a time of flight camera.

11. A method of localizing a person (2) or object (8) in a monitored zone using a safety system (1) having at least one movable machine (11), having a control and evaluation unit (3), having at least one radio location system (4), and having at least one spatially resolving sensor (7) for the position determination of the person (2) or object (8),
wherein the radio location system (4) has arranged radio stations (5);
wherein at least one radio transponder (6) is arranged at the person (2) or object (8);
wherein position data of the person (2) or object (8) are determined by means of the radio location system (4);
wherein the position data are transmitted from the radio stations (5) of the radio location system (4) to the control and evaluation unit (3);
and position data of the of the person (2) or object (8) are determined by means of the spatially resolving sensor (7),
**characterized in that** the control and evaluation unit (3) compares the position data of the radio location system (4) and the position data of the sensor (7) and forms checked position data on an agreement.

## Revendications

1. Système de sécurité (1) pour localiser au moins une personne (2) ou au moins un objet (8) dans une zone à surveiller, comprenant au moins une machine mobile (11), une unité de commande et d'évaluation (3), au moins un système de radiolocalisation (4), au moins un capteur à résolution spatiale (7) pour déterminer la position de la personne (2) ou de l'objet (8), dans lequel le système de radiolocalisation (4) comprend des stations radio (5) disposées,
au moins un transpondeur radio (6) est disposé sur la personne (2) ou sur l'objet (8),
des données de position de la personne (2) ou de l'objet (8) peuvent être déterminées au moyen du système de radiolocalisation (4),
les données de position peuvent être transmises par les stations radio (5) du système de radiolocalisation (4) à l'unité de commande et d'évaluation (3),
et des données de position de la personne (2) ou de l'objet (8) peuvent être déterminées au moyen du capteur à résolution spatiale (7),
**caractérisé en ce que**
l'unité de commande et d'évaluation (3) est réalisée pour comparer les données de position du système de radiolocalisation (4) et les données de position du capteur (7) et pour, en cas de concordance, former des données de position vérifiées.

2. Système de sécurité (1) selon la revendication 1, **caractérisé en ce que** l'unité de commande et d'évaluation (3) est réalisée pour comparer les données de position du système de radiolocalisation (4) et les données de position du capteur (7) et pour, en cas de concordance, admettre la personne ou l'objet, comprenant le transpondeur radio, dans un champ de protection du capteur à résolution spatiale et pour ne pas émettre de signal de détection d'objet, la machine mobile (11) étant ainsi dans un état actif.

3. Système de sécurité (1) selon l'une au moins des revendications précédentes, **caractérisé en ce que** le capteur à résolution spatiale (7) et les stations radio (5) sont disposés de manière stationnaire ou sont disposés de manière mobile sur une machine mobile (11).

4. Système de sécurité (1) selon l'une au moins des revendications précédentes, **caractérisé en ce que** des données de position vérifiées sont formées sur la base des données de position du système de radiolocalisation (4) et des données de position du capteur (7), l'unité de commande et d'évaluation est réalisée pour comparer les données de position vérifiées à des données de référence et, en cas de concordance, il se produit une modification de la fonction de sécurité du système de sécurité (1) au moyen de l'unité de commande et d'évaluation (3), l'actionneur fonctionnant dans un mode de fonctionnement non dangereux.

5. Système de sécurité (1) selon l'une au moins des revendications précédentes, **caractérisé en ce que** l'unité de commande et d'évaluation (3) est réalisée pour établir une fonction de sécurité modifiée sur la base des données de position vérifiées de l'unité de commande et d'évaluation, un mouvement de la machine mobile étant modifié ou influencé par l'unité de commande et d'évaluation en fonction de la distance de la personne par rapport à la machine mobile.

6. Système de sécurité (1) selon l'une au moins des revendications précédentes, **caractérisé en ce que** le système de radiolocalisation (4) est un système de radiolocalisation à bande ultralarge, la fréquence utilisée étant comprise dans la plage de 3,1 GHz à 10,6 GHz, l'énergie d'émission par station radio (5) étant de 0,5 mW au maximum.

7. Système de sécurité (1) selon l'une au moins des revendications précédentes, **caractérisé en ce que** le capteur à résolution spatiale (7) est un capteur optoélectronique, un capteur à ultrasons ou un capteur radar.

8. Système de sécurité (1) selon l'une au moins des revendications précédentes, **caractérisé en ce que** le capteur à résolution spatiale (7) est réalisé pour une surveillance au moins surfacique d'une zone à surveiller.

9. Système de sécurité (1) selon l'une au moins des revendications précédentes, **caractérisé en ce que** le capteur à résolution spatiale (7) est réalisée pour la surveillance au moins spatiale d'une zone à surveiller.

10. Système de sécurité (1) selon l'une au moins des revendications précédentes, **caractérisé en ce que** le capteur optoélectronique est un scanner laser (10), un scanner laser de sécurité, une caméra 3D, une caméra stéréo ou une caméra à temps de vol de lumière.

11. Procédé de localisation d'une personne (2) ou d'un objet (8) dans une zone à surveiller au moyen d'un système de sécurité (1), comprenant au moins une machine mobile (11), une unité de commande et d'évaluation (3), au moins un système de radiolocalisation (4), au moins un capteur à résolution spatiale (7) pour déterminer la position de la personne (2) ou de l'objet (8), dans lequel le système de radiolocalisation (4) comprend des stations radio (5) disposées,
au moins un transpondeur radio (6) est disposé sur la personne (2) ou sur l'objet (8),
des données de position de la personne (2) ou de l'objet (8) sont déterminées au moyen du système de radiolocalisation (4),
les données de position sont transmises par les stations radio (5) du système de radiolocalisation (4) à l'unité de commande et d'évaluation (3),
et des données de position de la personne (2) ou de l'objet (8) sont déterminées au moyen du capteur à résolution spatiale (7),
**caractérisé en ce que** l'unité de commande et d'évaluation (3) compare les données de position du système de radiolocalisation (4) et les données de position du capteur (7) et forme, en cas de concordance, des données de position vérifiées.
